**Europäisches Patentamt**

**European Patent Office**

**Office européen des brevets**

(19)

(11) Veröffentlichungsnummer: **0 011 064**
**B1**

(12) # EUROPÄISCHE PATENTSCHRIFT

(45) Veröffentlichungstag der Patentschrift:
**12.08.81**

(21) Anmeldenummer: **78101358.6**

(22) Anmeldetag: **11.11.78**

(51) Int. Cl.³: **A 47 J 43/042, A 47 G 23/02**

(54) **Drehständer mit Spiritusbrenner für Stielgläser, insbesondere Irish-Coffee-Gläser.**

(43) Veröffentlichungstag der Anmeldung:
**28.05.80 Patentblatt 80/11**

(45) Bekanntmachung des Hinweises auf die Patenterteilung:
**12.08.81 Patentblatt 81/32**

(84) Benannte Vertragsstaaten:
**BE CH DE FR GB LU NL**

(56) Entgegenhaltungen:
**FR-A- 2 149 408**

(73) Patentinhaber: **Im Brahm, Walter, Rubensstrasse 14, D-4300 Essen (DE)**
Patentinhaber: **Diete, Friedrich, An der Beeke 13, D-4130 Moers (DE)**

(72) Erfinder: **Im Brahm, Walter, Rubensstrasse 14, D-4300 Essen (DE)**
Erfinder: **Diete, Friedrich, An der Beeke 13, D-4130 Moers (DE)**

(74) Vertreter: **Ackmann, Günther, Dr.-Ing., Claubergstrasse 24, D-4100 Duisburg 1 (DE)**

## Drehständer mit Spiritusbrenner für Stielgläser, insbesondere Irish-Coffee-Gläser

Die Erfindung betrifft einen Drehständer mit Spiritusbrenner für Stielgläser, insbesondere Irish-Coffee-Gläser, bei dem auf einer Grundplatte die Stielgläser aufnehmende, eine Drehung der Gläser um ihre Hochachse zulassende Glashalter vorgesehen sind, und antriebsmäßig miteinander verbundene, durch Reibung auf die Gläser einwirkende Antriebsorgane zum Drehen der Gläser angeordnet sind. Derartige Drehständer sind durch die FR-A 21 49 408 bekannt.

Für die Bereitung von Irish-Coffee finden Stielgläser Verwendung, die, teilweise mit Whisky gefüllt, in einem besonderen Glashalter über einen Spiritusbrenner von Hand um ihre Mittelachse verdreht und erwärmt werden. Da ein solcher Ständer immer nur ein Stielglas aufzunehmen vermag, kann nur ein Glas nach dem anderen zubereitet werden, sofern nicht eine entsprechende Vielzahl derartiger mit Spiritusbrennern ausgestatteter Glasständer zur Verfügung stehen. Das ist insbesondere bei größeren Gesellschaften zeitraubend und unangenehm. Für eine gleichzeitige Drehung und Erwärmung mehrerer Irish-Coffee-Gläser mit einem Gerät ist aus der FR-A 21 49 408 bereits eine Vorrichtung bekannt, bei der ein Rahmen mit Tellern zur Aufnahme der Gläser versehen ist, die in der Art von Stirnzahnrädern miteinander verbunden sind. Die Gläser stehen mit ihren Standflächen in den Tellern und werden beim Antrieb der Teller mitgedreht. Diese Ausführung ist jedoch umständlich im Aufbau und von der Antriebsseite her reparaturanfällig.

Demgegenüber liegt der Erfindung die Aufgabe zugrunde, einen Drehständer der gattungsgemäßen Art derart auszubilden, daß der Aufbau und insbesondere der Drehantrieb für die Stielgläser vereinfacht und verbessert wird.

Diese Aufgabe wird erfindungsgemäß dadurch gelöst, daß die Glashalter und ein oder mehrere Reibantriebe derart angeoidnet und ausgebildet sind, daß die Glasfüße der in den Glashaltern einliegenden Stielgläser mit ihrem Rand abrollend zur Anlage an den zugehörigen Reibantrieb kommen.

Bei diesem neuartigen Gerät können je nach Ausstattung zwei oder mehrere der in den Glashaltern einliegenden Stielgläser gleichzeitig durch Betätigung des Reibantriebes um ihre Mittelachse verdreht werden, um den Gläserinhalt über dem jeweils zugeordneten Spiritusbrenner gleichmäßig zu erwärmen. Dabei bleibt jedes eingelegte Stielglas in dem betreffenden Glashalter über dem zugeordneten Spiritusbrenner gelagert, während der Glasfuß mit seinem kreisrunden Umfang an dem Reibantrieb abrollt.

Für dieses Grundprinzip kann der am Rand der Glasfüße angreifende Reibantrieb verschieden ausgebildet sein.

Eine besonders einfache Ausführungsform sieht vor, daß die Grundplatte scheibenförmig ausgebildet und innerhalb eines Ringkörpers drehbar gelagert ist und die Glashalter derart angeordnet sind, daß die Glasfüße radial nach außen weisen und mit ihrem Außenumfang gegen einen peripher am Ringkörper angeordneten Reibring zur Anlage kommen. Die Grundplatte hat die Form einer mit den Glashaltern und den Spiritusbrennern ausgerüsteten Drehscheibe. Wird diese durch Handantrieb oder auch durch einen motorischen Antrieb in Drehung versetzt, rollen die Glasfüße mit ihrem Rand auf dem ortsfesten Reibring ab, wobei die auf der Grundplatte befestigten Spiritusbrenner und Glashalter und damit auch die eingelegten Stielgläser um die Mittelachse der Grundplatte mitgedreht werden. Als Drehlager für die Grundplatte im Ringkörper kann entweder ein Axiallager vorgesehen sein, oder der Ringkörper trägt mit einem Standring und an seinem Innenumfang Laufrollen auf radial zum Ring angeordneten Achsen, auf denen die Grundplatte mit einer peripheren Schulter aufliegt. Vorzugsweise ist der Ringkörper mit einer neben dem Reibring und radial außen zu ihm verlaufenden Stützschulter für die Glasfüße versehen, welche den Glasfuß einerseits abstützt und andererseits zum Reibring hinlenkt, so daß ein guter Reibungsschluß vorhanden ist und ein Abrollen des Glasfußes gewährleistet ist.

Eine andere Ausführungsform für den Reibantrieb besteht darin, daß die Grundplatte scheibenförmig ausgebildet ist, gegenüber einer Bodenplatte drehbar gelagert und an ihrem Umfang mit gegen die Bodenplatte anliegenden Rollen versehen ist und daß die Glashalter derart angeordnet sind, daß die radial nach außen weisenden Glasfüße jeweils von oben gegen eine der Rollen zur Anlage kommen. Beim Verdrehen der Grundplatte wälzen sich die Rollen auf der Bodenplatte ab und die sich um ihre Achse drehenden Rollen versetzten den betreffenden Glasfuß in Drehung. Die Rollen sind also sowohl Laufrollen für die Grundplatte als auch Reibrollen für die Glasfüße. .

Zur Ausbildung einer dritten Ausführungsform für den Reibantrieb ist vorgesehen, daß an der ortsfesten Grundplatte ein Ringkörper um eine senkrecht zur Grundplatte liegende Achse drehbar gelagert ist und die Glashalter derart angeordnet sind, daß die Glasfüße radial nach außen weisen und mit ihrem Außenumfang gegen einen peripher am Ringkörper angeordneten Reibring zur Anlage kommen. Bei dieser Ausführung wird der Reibring gedreht und bewirkt das Verdrehen der Stielgläser, die in den auf der ortsfesten Grundplatte befestigten Glashaltern gelagert sind.

Schließlich sieht eine vierte Ausführungsform vor, daß am Rand der Grundplatte mit einem Triebwerk verbundene Reibrollen gelagert und die Glashalter derart angeordnet sind, daß die Glasfüße mit mit ihrem Außenumfang jeweils gegen eine dieser Reibrollen zur Anlage kommen. Jedem Stielglas ist dabei ein eigener Reibantrieb zugeordnet und alle Reibantriebe werden durch ein gemeinsames Triebwerk betätigt, beispielsweise durch einen Anschluß der Reibrollen über ein Verteilergetriebe an eine Handkurbel oder einen Antriebsmotor in Form eines Federwerkes oder eines Elektromotors. Die Grundplatte kann ebenfalls scheibenförmig ausgebildet sein, aber auch einen quadratischen oder rechteckigen Grundriß haben, wobei die Reibrollen an einer oder an mehreren Seiten angebracht sind. Bei einem rechteckigen Grundriß können Glashalter, Spiritusbrenner und Reibantriebe in ein oder zwei beliebig langen Reihen angeordnet sein.

Die Auf der Grundplatte angeordneten Glashalter können einen üblichen Aufbau haben und beispielsweise aus einem an der Grundplatte befestigten Stützfuß bestehen, an dem zwei U-förmige Bügel für die Einlage eines Stielglases angebracht sind. Wird das Stielglas mit Hilfe des Reibantriebes gedreht, so wird es von den beiden Bügeln gehalten. Die beiden Bügel sind also Lager für das Glas. Außerdem tragen sie in ihrer Funktion dafür Sorge, daß das Glas in einer richtigen Lage über dem zugeordneten Spiritusbrenner angeordnet ist. Jedem Glashalter ist ein in die Grundplatte eingelassener Spiritusbrenner zugeordnet. Bei einer bevorzugten Ausführungsform sind auf der Grundplatte vier Glashalter mit je einem Spiritusbrenner angeordnet. Es besteht jedoch auch die Möglichkeit, mehrere Glashalter mit einer entsprechenden Anzahl Spiritusbrenner auf der Grundplatte anzubringen.

In der Regel kann die Drehbewegung des Drehständers von Hand ausgeführt werden, indem entweder die Grundplatte oder der Reibring von Hand gedreht werden. Es besteht aber auch die Möglichkeit, daß die drehbare Grundplatte bzw. der drehbare Ringkörper mit einem Getriebe versehen werden, welches von einem Federwerk oder einem Elektromotor angetrieben wird.

Der Gegenstand der Erfindung ist in der Zeichnung an Hand mehrerer Ausführungsbeispiele näher erläutert; es zeigt

Fig. 1 einen Drehständer in einer seitlichen Ansicht,

Fig. 2 den Gegenstand der Fig. 1 in einer Draufsicht,

Fig. 3 einen Teilschnitt durch den Drehständer der Fig. 1 und 2,

Fig. 4 einen Teilschnitt durch eine weitere Ausführungsform,

Fig. 5 ein weiteres Ausführungsbeispiel in einer seitlichen Ansicht,

Fig. 6 den Gegenstand der Fig. 5 in einer Draufsicht und

Fig. 7 einen Teilschnitt durch den Gegenstand der Fig. 5 und 6.

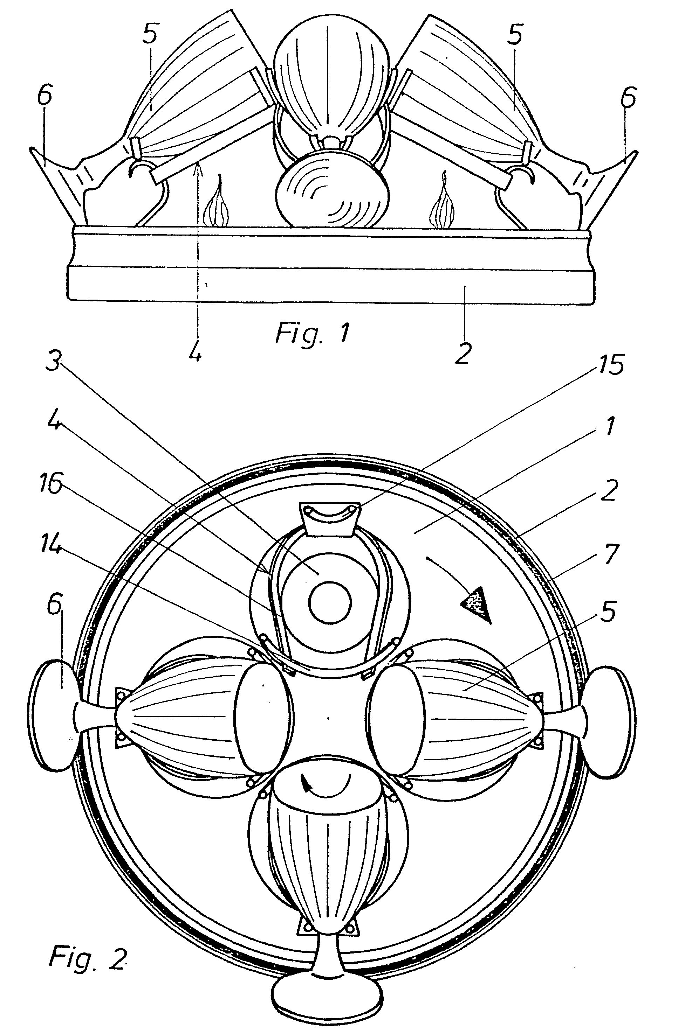

Bei dem in den Fig. 1 bis 3 dargestellten ersten Ausführungsbeispiel besteht der Drehständer im wesentlichen aus einer scheibenförmigen Grundplatte 1, die von einem Ringkörper 2 eingefaßt und an diesem drehbar gelagert ist.

Auf der Grundplatte 1 sind vier Spiritusbrenner 3 um 90° versetzt angeordnet. Neben jedem Spiritusbrenner 3 ist ein Glashalter 4 angebracht, der so ausgebildet ist, daß die Stielgläser 5 mit ihrem Behälterteil über dem zugeordneten Spiritusbrenner 3 liegen und andererseits der mit einem kreisförmigen Rand versehene Glasfuß 6 gegen einen am Ringkörper 2 angeordneten Reibring 7 aus Gummi oder Kunststoff zur Anlage kommt.

Die mit der zu erwärmenden Flüssigkeit gefüllten Stielgläser 5 werden in die Glashalter 4 eingesetzt und von den angezündeten Spiritusbrennern 3 erwärmt. Für eine gleichmäßige Erwärmung wird die Grundplatte 1 gedreht, beispielsweise im Sinne des in Fig. 2 gezeigten Pfeiles. Dabei rollen die Stielgläser 5 mit dem Rand ihres Glasfußes 6 auf dem Reibring 7 ab und versetzen damit das Glas in eine Drehung um seine mittlere Längsachse. In Fig. 2 ist angedeutet, daß bei dem gezeigten Drehsinn der Grundplatte 1 die Gläser in gleichem Drehsinne in den Glashaltern 4 zur Drehung gelangen. Wahlweise können natürlich in dem Drehständer auch weniger Gläser eingelegt und erwärmt werden.

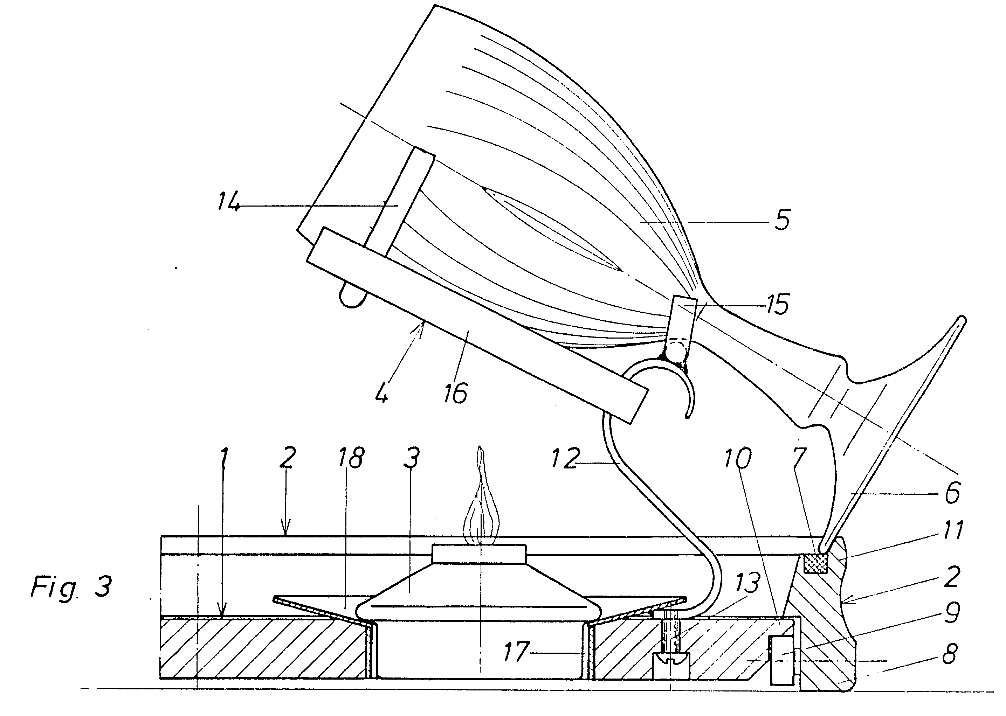

Wie Fig 3 zeigt, ist der Ringkörper 2 mit einem nach unten weisenden Standring 8 oder Füßen versehen, mit dem er auf einer Tischplatte o. dgl. zur Auflage kommt. An der Innenfläche des Ringkörpers 2 sind nach innen weisende Laufrollen 9 angebracht, auf denen die Grundplatte 1 mit einer peripheren Schulter 10 aufliegt. Weiterhin ist dieser Ringkörper 2 am oberen Rand mit einer peripheren Stützschulter 11 für die Glasfüße 6 ausgestattet. Diese stützt nicht nur das Stielglas 5 ab, sondern lenkt den Rand des Glasfußes 6 auch gegen den in einer Ringnut eingelassenen Reibring 7.

Die Glashalter 4 bestehen im wesentlichen aus einem Stützfuß 12, der an seinem unteren Ende mittels einer Schraube 13 an der Grundplatte 1 befestigt ist. Im oberen Bereich sind wesentliche Bestandteile zwei U-förmige Bügel 14, 15, in denen das Glas einliegt. Der größere Bügel 14 ist durch zwei Arme 16, die ebenfalls eine Art Bügel bilden, mit dem Stützfuß 12 verbunden. Der Glashalter 4 kann beispielsweise aus geschmiedeten Teilen bestehen.

Die Spiritusbrenner 3 sind, wie Fig. 3 zeigt, in Öffnungen 17 eingelassen, welche mit einem Schutzring 18 aus Metall verkleidet sind. Die Grundplatte 1 besteht aus einem nicht entflammbaren oder zumindest schwer entflammbaren Werkstoff. In Betracht kommen Metall, aber auch Holz oder Kunststoff, wobei vorzugsweise die Oberfläche mit einem geeigneten Metallbeschlag versehen ist. Sie kann insbesondere auch aus geformtem Blech aus Edelstahl, Messing oder Kupfer bestehen. Der Ringkörper 2 kann aus einem gleichen Werkstoff gefertigt sein.

Bei der Ausführung nach den Fig. 1 bis 3 bildet der Ringkörper 2 den ortsfesten, auf einer Tischplatte o. dgl. stehenden Teil, während die Grundplatte 1 drehbeweglich angeordnet ist und durch deren Verdrehung der Reibantrieb erfolgt. Diese Kinematik läßt sich aber zu einer nicht dargestellten Ausführungsform umkehren, indem an einer ortsfesten, d. h. auf der Tischplatte liegenden Grundplatte ein Ringkörper drehbar gelagert ist und die Glashalter entsprechend angeordnet sind, so daß die radial nach außen weisenden Glasfüße gegen einen peripher am Ringkörper angeordneten Reibring zur Anlage kommen. Hierbei muß der Ringkörper gedreht werden, um den gewünschten Reibantrieb der Stielgläser zu erzielen. Die Betätigung kann entweder durch Hand geschehen. Es ist aber auch möglich, die zu drehenden Teile, die Grundplatte bzw. den Ringkörper mit einem motorischen Antrieb zu versehen, indem ein geeignetes Getriebe und ein Federwerk oder ein Elektromotor vorgesehen werden.

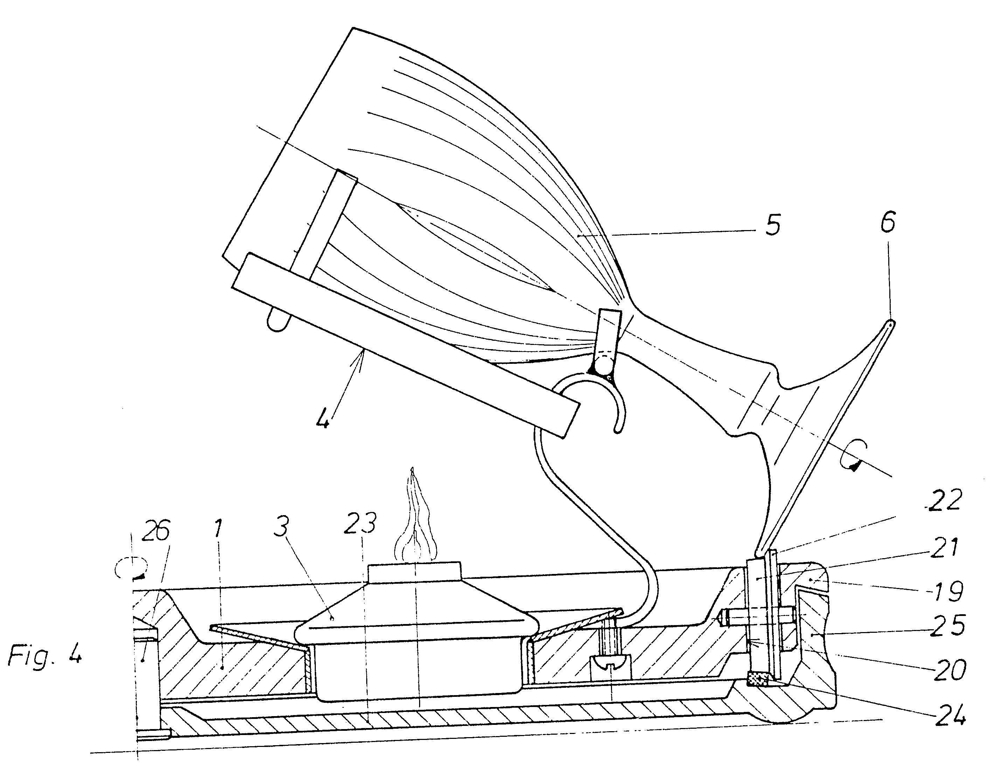

Fig. 4 zeigt die Hälfte eines Querschnittes durch eine weitere Ausführungsform. Auch dieser Drehständer weist eine scheibenartige Grundplatte 1 auf, die auf einer Bodenplatte 23 um ein Lager 26 drehbar gelagert ist. Am Rand 19 der Gundplatte 1 sind außerhalb eines jeden Glashalters 4 Schlitze 20 vorhanden, in denen je eine Rolle 21 mittels einer Welle drehbar gelagert ist. Jede Rolle 21 ist mit einer außen liegenden ringförmigen Schulter 22 versehen, die der Abstützung und als Reibantrieb für den betreffenden Glasfuß 6 dient. Der Antrieb der Rollen 21 erfolgt beim Drehen der Grundplatte 1 dadurch, daß diese auf der Bodenplatte 23 abrollen. Zur Erhöhung der Reibung ist auf der kreisförmigen Fahrbahn ein Laufring 24 aus Gummi oder Kunststoff befestigt. Zur Abdeckung der Rollenlager und der Fahrbahn ist am Rand der Bodenplatte 23 ein nach oben weisender Kragen angeformt. Bei dieser Ausführungsform ist jedem Stielglas 5 ein eigener Rollenantrieb zugeordnet, wobei alle Rollenantriebe beim Verdrehen der Grundplatte 1 durch ihren Lauf auf dem Laufring 24 in Bewegung gebracht werden. Die Rollen 21 sind sowohl Antriebsrollen für die Gläser als auch Laufräder für die Grundplatte. Auch hier kann die Drehung der Grundplatte 1 von Hand oder mit Hilfe eines Motors erfolgen, wobei ein geeignetes Getriebe vorgesehen sein kann.

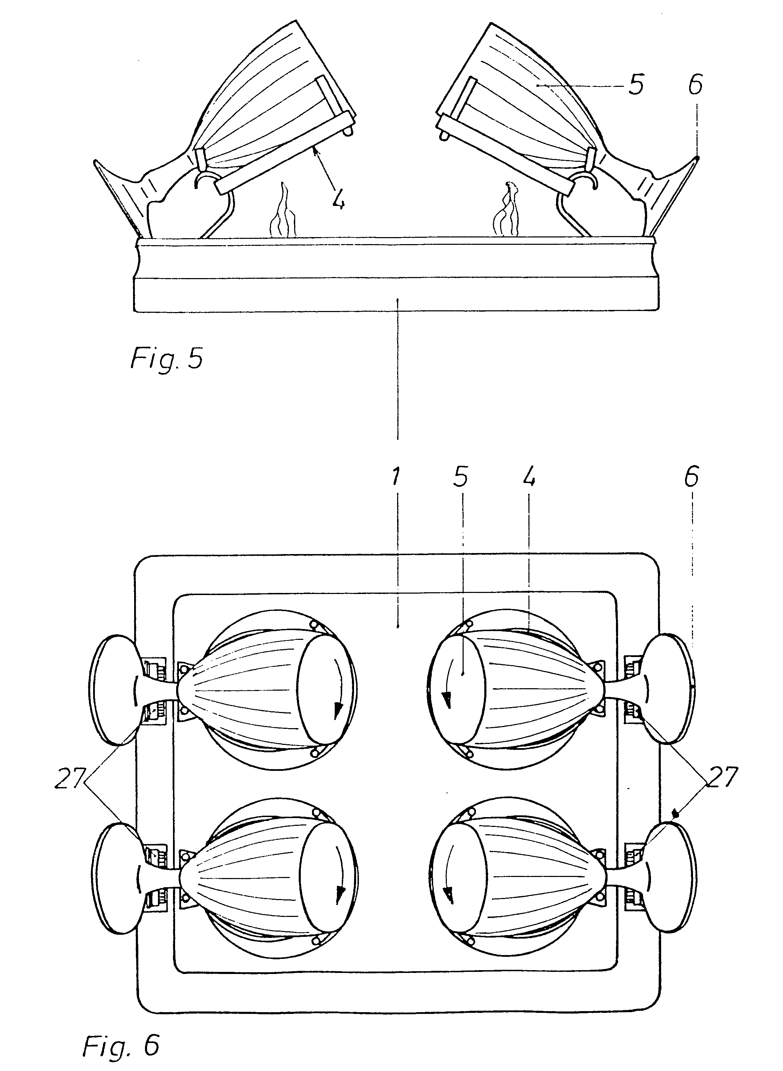

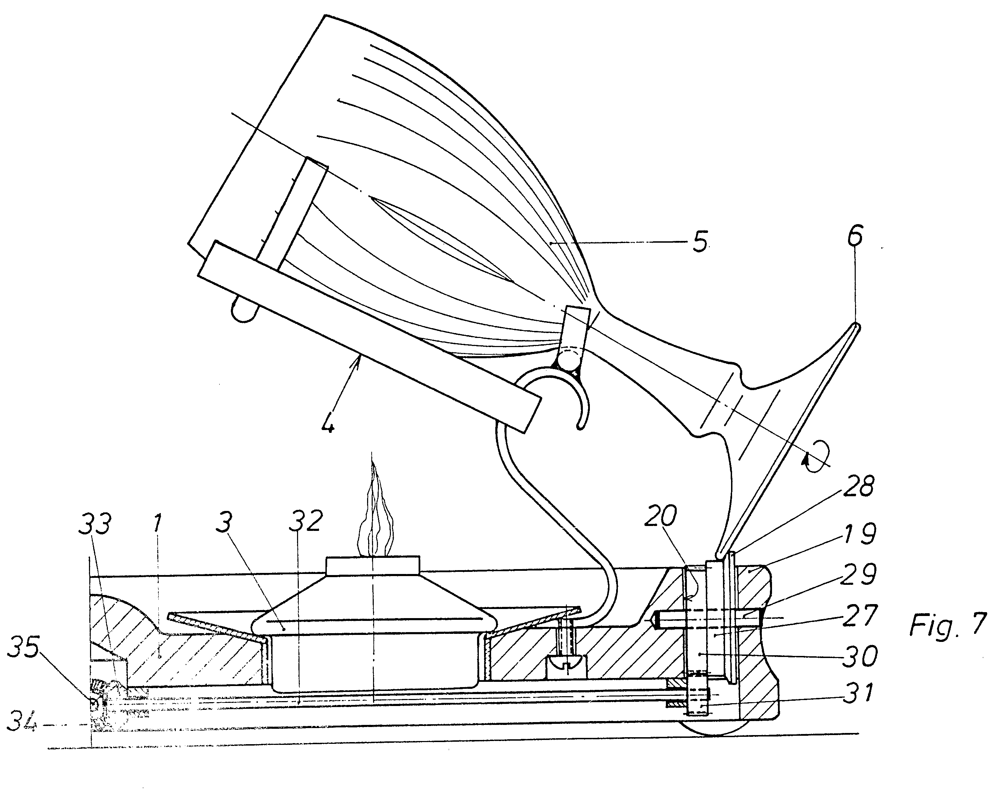

Die in den Fig. 5 bis 7 gezeigte Ausführungsform besitzt ebenfalls für jedes Glas einen eigenen Reibantrieb. Die Grundplatte 1 steht fest auf der Tischplatte und hat einen rechteckigen Grundriß. An zwei einander gegenüberliegenden Seiten sind am Rand zwei Schlitze 20 vorgesehen, in denen je eine mit einer ringförmigen Schulter 28 versehene Reibrolle 27 mittels einer Lagerwelle 29 drehbar gelagert ist. Auf der Innenseite jeder Reibrolle 27 ist ein Zahnrad 30 angeformt oder befestigt, in das von unten her ein Zahnritzel 31 eingreift. Jedes Zahnritzel 31 sitzt auf einer Welle 32, die an ihrem inneren Ende ein Kegelzahnrad 33 trägt. Diese Kegelzahnräder 33 stehen mit auf einer Antriebswelle 35 befestigten Kegelzahnrädern 34 in Eingriff, wodurch eine Art Verteilergetriebe gebildet ist.

Durch Betätigung der Antriebswelle 35 mittels einer äußeren Handkurbel oder einem Motor, z. B. einem Federwerk oder einem Elektromotor, werden alle Reibrollen 21 angetrieben, die durch Reibungsschluß mit den Glasfüßen 6 die Stielgläser 5 in der gewünschten Weise verdrehen.

Ferner besteht die Möglichkeit, den Drehständer mit weniger oder mehr Glashaltern und Spiritusbrennern auszurüsten. Für eine besonders brauchbare Form können beispielsweise auch sechs Glashalter und sechs Spiritusbrenner angebracht sein. Insbesondere lassen sich bei der Ausführung nach den Fig. 5 bis 7 eine Vielzahl von Glashaltern, Spiritusbrennern und einzelnen Rollenantrieben auf einer oder auf zwei einander gegenüberliegenden Seiten einer länglichen Grundplatte anbringen.

Für einen Elektromotor kann entweder ein Netzanschluß oder eine Stromspeisung durch Akkumulator oder Batterie vorgesehen sein.

## Patentansprüche

1. Drehständer mit Spiritusbrenner für Stielgläser (5), insbesondere Irish-Coffee-Gläser, bei dem auf einer Grundplatte (1) die Stielgläser aufnehmende, eine Drehung der Gläser um ihre Hochachse zulassende Glashalter (4) vorgesehen sind, und antriebsmäßig miteinander verbundene, durch Reibung auf die Gläser einwirkende Antriebsorgane zum Drehen der Gläser angeordnet sind, dadurch gekennzeichnet, daß die Glashalter (4) und ein oder mehrere Reibantriebe (7, 21, 27) derart angeordnet und ausgebildet sind, daß die Glasfüße (6) der in den Glashaltern einliegenden Stielgläser (5) mit ihrem Rand abrollend zur Anlage an den zugehörigen Reibantrieb kommen.

2. Drehständer nach Anspruch 1, dadurch gekennzeichnet, daß die Grundplatte (1) scheibenförmig ausgebildet und innerhalb eines Ringkörpers (2) drehbar gelagert ist und die Glashalter (4) derart angeordnet sind, daß die Glasfüße (6) radial nach außen weisen und mit ihrem Außenumfang gegen einen peripher am Ringkörper angeordneten Reibring (7) zur Anlage kommen.

3. Drehständer nach Anspruch 2, dadurch gekennzeichnet, daß der Ringkörper (2) einen Standring (8) aufweist und an seinem Innenumfang Laufrollen (9) auf radial zum Ring angeordneten Achsen trägt, auf denen die Grundplatte (1) mit einer peripheren Schulter (10) aufliegt.

4. Drehständer nach Anspruch 2 oder 3, dadurch gekennzeichnet, daß der Ringkörper (2) mit einer neben dem Reibring (7) und radial außen zu ihm verlaufenden Stützschulter (11) für die Glasfüße (6) versehen ist.

5. Drehständer nach Anspruch 1, dadurch gekennzeichnet, daß die Grundplatte (1) scheibenförmig ausgebildet ist, gegenüber einer Bodenplatte (23) drehbar gelagert und an ihrem Umfang mit gegen die Bodenplatte anliegenden Rollen (21) versehen ist und daß die Glashalter (4) derart angeordnet sind, daß die radial nach außen weisenden Glasfüße (6) jeweils von oben gegen eine der Rollen zur Anlage kommen.

6. Drehständer nach Anspruch 1, dadurch gekennzeichnet, daß an der Grundplatte ein Ringkörper drehbar um eine senkrecht zur Grundplatte liegende Achse gelagert ist und die Glashalter derart angeordnet sind, daß die Glasfüße (6) radial nach außen weisen und mit ihrem Außenumfang gegen einen peripher am Ringkörper angeordneten Reibring zur Anlage kommen.

7. Drehständer nach Anspruch 1, dadurch gekennzeichnet, daß am Rand der Grundplatte (1) mit einem Triebwerk (30 bis 34) verbundene Reibrollen (27) gelagert und die Glashalter (4) derart angeordnet sind, daß die Glasfüße (6) mit ihrem Außenumfang jeweils gegen eine dieser Reibrollen zur Anlage kommen.

8. Drehständer nach Anspruch 7, dadurch gekennzeichnet, daß die Reibrollen (27) über ein Verteilergetriebe an eine Handkurbel oder einen Antriebsmotor angeschlossen sind.

9. Drehständer nach einem der Ansprüche 1 bis 8, dadurch gekennzeichnet, daß die Glashalter (4) jeweils aus einem an der Grundplatte (1) befestigten Stützfuß (12) bestehen, an dem zwei U-förmige Bügel (14, 15) für die Einlage eines Stielglases (5) angebracht sind.

10. Drehständer nach einem der Ansprüche 1 bis 7, dadurch gekennzeichnet, daß jedem Glashalter (4) ein in die Grundplatte (1) eingelassener Spiritusbrenner (3) zugeordnet ist.

11. Drehständer nach einem der Ansprüche 1 bis 1), dadurch gekennzeichnet, daß auf der Grundplatte (1) vier Glashalter (4) mit je einem Spiritusbrenner (3) angeordnet sind.

12. Drehständer nach einem der Ansprüche 1 bis 7 und 9 bis 11, dadurch gekennzeichnet, daß die drehbare Grundplatte (1) bzw. der drehbare Ringkörper (2) mit einem Getriebe versehen ist, welches von einem Federwerk oder einem Elektromotor angetrieben wird.

## Claims

1. A spirit-burner turntable for stemmed glasses (5), more particularly Irish coffee glasses, comprising a glass holder (4) which receives the stemmed glasses on a baseplate (1) and allows rotation of the glasses about their vertical axis, further comprising drive means for rotating the glasses, said means being drivingly interconnected and acting on the glasses by friction, characterised in that the glass holders (4) and one or more friction drives (7, 21, 27) are so disposed and constructed that the feet (6) of the stemmed glasses (5) resting in the glass holders roll by their edge bearing against the associated fiction drive.

2. A turntable according to claim 1, characterised in that the baseplate (1) is of disc-shaped construction and is mounted for rotation inside an annular member (2) and the glass holders (4) are so disposed that the feet (6) of the glasses extend radially outwards and their outer periphery bears against a friction ring (7) disposed peripherally on the annular member.

3. A turntable according to claim 2, characterised in that the annular member (2) has a supporting ring (8) and bears, at its inner periphery, rollers (9) on axles disposed radially in relation to the ring, the baseplate (1) bearing on said rollers (9) by a peripheral shoulder (10).

4. A turntable according to claim 2 oder 3, characterised in that the annular member (2) is provided with a supporting shoulder (11) for the feet (6) of the glasses, said shoulder (11) extending next to the friction ring (7) and radially outwards there of.

5. A turntable according to claim 1, characterised in that the baseplate (1) is of disc-shaped construction, is mounted for rotation relatively to a baseplate (23), and is provided at its periphery with rollers (21) bearing against the baseplate and the glass holders (4) are so disposed that the radially outwardly extending feet (6) oh the glasses each rest against one of the rollers from above.

6. A turntable according to claim 1, characterised in that an annular member ist mounted on the baseplate for rotation about an axis perpendicular to the baseplate and the glass holders are so disposed that the feet (6) of the glass extend radially outwards and bear by their outer periphery against a friction ring disposed peripherally on the annular member.

7. A turntable according to claim 1, charaterised in that friction rollers (27) connected to a driving mechanism (30 to 34) are mounted at the edge of the baseplate (1) and the glass holders (4) are so disposed that the feet (6) of the glasses each bear by their outer periphery against one of said friction rollers.

8. A turntable according to claim 7, characterised in that the friction rollers (27) are connected to a hand crank or a drive motor via a transmission gear.

9. A turntable according to any one of claims 1 to 8, characterised in that the glass holders (4) each consist of a supporting foot (12) which is fixed on the baseplate (1) and on which two U-shaped members (14, 15) are fitted to receive a stemmed glass (5).

10. A turntable according to any one of claims 1 to 7, characterised in that each glass holder (4) has its own spirit burner (3) recessed into the baseplate (1).

11. A turntable according to any one of claims 1 to 10, characterised in that four glass holders (4) each having a spirit burner (3) are disposed on the baseplate (1).

12. A turntable according to any one of claims 1 to 7 and 9 to 11, characterised in that the rotatable baseplate (1) and/or the rotatable annular member (2) is provided with a transmission driven by a clockwork mechanism or an elextric motor.

## Revendications

1. Support rotatif à réchauds à alcool pour verres (5) à pied, notamment pour verres à Irish-coffee, dans lequel sont prévus sur une platine (1) des porte-verres (4) autorisant une rotation des verres autour de leur axe vertical et des organes d'entraînement qui sont reliés entre eux par entraînement et qui agissent sur les verres par frottement por les faire tourner, caractérisé en ce que les porte-verres (4) et un ou plusieurs organes (7, 21, 27) d'entraînement par frottement sont disposés et agencés de manière à ce ques les pieds (6) des verres se trouvant dans les porte-verres (4) viennent rouler par leur bord en contact avec leur organe d'entraînement respectif par frottement.

2. Support selon la revendication 1, caractérisé en ce que la platine (1) est en forme de disque et est montée à rotation dans un corps (2) annulaire et les porte-verres (4) sont disposés de manière à ce que les pieds (6) des verres soient tournés radialement vers l'extérieur et viennent en contact par leur pourtour extérieur avec un anneau (7) de frottement se trouvant à la pérphérie du corps (2) annulaire.

3. Support rotatif selon la revendication 2, caractérisé en ce que le corps (2) annulaire présente un socle (8) annulaire et porte à sa périphérie intérieure des galets (9) de roulement, qui sont montés sur des axes disposés radialement par rapport au socle annulaire et sur lesquels la platine (1) repose par un rebord (10) périphérique.

4. Support rotatif selon la revendication 2 ou 3, caractérisé en ce que le corps (2) annulaire est muni d'un épaulement (11) d'appui pour les pieds (6) des verres, qui s'étend à côté de l'anneau (7) de frottement en allant vers lui radialement à l'extérieur.

5. Support rotatif suivant la revendication 1, caractérisé en ce que la platine (1) est en forme de disque, est montée à rotation par rapport à une plaque (23) de fond et est munie sur le pourtour de galets (21) portant sur la plaque (23) de fond et les porte-verres (4) sont disposé de manière à ce que les pieds (6) des verres tournés radialement vers l'extérieur viennent respectivement en contact par le haut avec l'un des galets.

6. Support rotatif suivant la revendication 1, caractérisé en ce que corps annulaire est monté à rotation sur la platine autour d'un axe perpendiculaire à celle-ci et les porte-verres sont disposés de manière à ce que les pieds (6) des verres soient tournés radialement vers l'extérieur et viennent en contact par leur pourtour extérieur avec un anneau de frottement se trouvant à la périphérie du corps annulaire.

7. Support rotatif suivant la revendication 1, caractérisé par des galets (27) montés sur le bord de la platine (1) et reliés à un mécanisme (30 à 34) d'entraînement et les porte-verres (4) sont disposés de manière à ce que les pieds (6) des verres viennent en contact par leur pourtour extérieur respectivement avec ces galets de frottement.

8. Support rotatif selon la revendication 7, caractérisé en ce que les galets (27) de frottement sont raccodés par une transmission de prise de force à une manivelle ou à un moteur d'entraînement.

9. Support rotatif suivant l'une des revendications 1 à 8, caractérisé ce que les porte-verres (4) sont constitués respectivement d'une jambe (12) d'appui qui est fixée à la platine (1) sur laquelle sont montés deux arceaux (14, 15) de réception d'un verre (5) à pied.

10. Support rotatif suivant l'une des revendications 1 à 7, caractérisé en ce qu' à chaque porte-verre (4) est associé un réchaud (3) à alcool incorporé à la platine (1).

11. Support rotatif suivant l'une des revendications 1 à 10, caractérisé en ce que sur la platine (1) sont disposés quatre porte-verres (4) ayant chacun un réchaud (3) à alcool.

12. Support rotatif suivant l'une des revendications 1 à 7 et 9 à 11, caractérisé en ce que la platine (1) tournante ou le corps (2) annulaire tournant est muni d'une transmission, qui est entraînée par un mouvement à ressort ou par un moteur électrique.

Fig. 1

Fig. 2

Fig. 3

Fig. 4

Fig. 5

Fig. 6

Fig. 7